# EUROPÄISCHE PATENTANMELDUNG

(11) **EP 2 508 808 A2**
(43) Veröffentlichungstag der Anmeldung: **10.10.2012**
(21) Anmeldenummer: 12163603.9
(22) Anmeldetag: 10.04.2012
(51) Int. Cl.: F24D 17/00, F24D 19/10

(54) **Verfahren zur Auslegung einer Heizungs- und/oder Trinkwassererwärmungsanlage**

(30) Priorität: 08.04.2011 DE 102011016462
(71) Anmelder: Solvis GmbH & Co. KG, 38112 Braunschweig (DE)
(72) Erfinder: Woelk, Karsten, 38527 Meine (DE); Grundei, Daniel, 38110 Braunschweig (DE)
(74) Vertreter: Einsel, Martin

(57) **Zusammenfassung**

Ein Verfahren zur Auslegung einer Heizungs- und/oder Trinkwassererwärmungsalage zeichnet sich dadurch aus, dass zunächst eine Analyse von aktuellen Betriebsdaten an einer vorhand Heizungs- und/oder Trinkwassererwärmungsanlage durchgeführt wird. Die aktuelle Energieabnahme und/oder die aktuelle Energiezuführung werden einem oder mehreren unterschiedlichen Strängen der Heizungs- und/oder Trinkwasserbereitungsanlage erfasst. Ferner erfolgt eine Erfassung von Lastspitzen. Darüber hinaus erfolgt eine Erfassung von Zapfprofilen von einer oder mehreren parallel geschalteten Trinkwassererwärmungsanlagen. Aus den erfassten Werten wird unter Vorgabe von Toleranzen eine Auslegung einer neuen Heizungs- und/oder Trinkwasserbereitungsanlage vorgenommen.

## Beschreibung

Die Erfindung betrifft ein Verfahren zur Auslegung einer Heizungs- und/oder Trinkwassererwärmungsanlage. Sie betrifft ferner ein Gerät zur Durchführung eines solchen Verfahrens.

Der Begriff "Trinkwassererwärmungsanlage" ist eine Normbezeichnung für Anlagen, die umgangssprachlich auch als "Warmwasserbereitungsanlagen" bezeichnet werden. Trinkwassererwärmungsanlagen sind also auch solche Anlagen, in denen Wasser für die Lebensmittelzubereitung oder beispielsweise zum Duschen erwärmt werden.

Heizungs- und/oder Trinkwassererwärmungsanlage haben eine Lebensdauer, die nicht nur von der mechanischen, thermischen und sonstigen Belastung der eingebauten Elemente und der Abnutzung abhängt, sondern auch davon, dass die technologische Entwicklung ständig verbesserte Anlagen zur Verfügung stellt, die deutlich weniger Energie für den gleichen Effekt verbrauchen oder andere, außerordentlich starke Vorteile gegenüber vorhandenen, herkömmlichen Anlagen besitzen. Dies führt zunehmend dazu, dass die Intervalle zur Installierung neuer Heizungs- und/oder Trinkwassererwärmungsanlagen ständig kürzer werden. Dazu trägt auch bei, dass die Anforderungen aufgrund von Umweltschutzbestimmungen hinsichtlich von Abgasen, Lärm und sonstigen Störungen stetig verschärft werden, was wiederum zur entsprechenden Neuentwicklung von Anlagen beiträgt, aber auch den rascheren Wechsel von alten zu neuen Anlagen fördert.

Während früher Heizungsanlagen viele Jahrzehnte in Betrieb bleiben konnten, bis sie nicht mehr nutzbar waren oder die Reparaturhäufigkeit zu hoch wurde, ist heute eine Standzeit von zwanzig Jahren für eine Heizungsanlage oder Trinkwassererwärmungsanlage schon als überdurchschnittlich lang zu betrachten.

Dies hat zur Folge, dass immer häufiger nicht nur ganz neue Heizungsanlagen und Trinkwassererwärmungsanlagen etwa in Neubauten eingebaut werden müssen, sondern dass bestehende Anlagen durch neu entwickelte, meist wesentlich bessere Anlagen ersetzt werden sollen.

Die Art und Auswahl des Typs einer solchen neuen Anlage erfolgt meist nach den persönlichen Einschätzungen und Vorlieben des Nutzers beziehungsweise des Eigentümers des betreffenden Gebäudes, die konkrete Auslegung der neuen Heizungs- und/oder Trinkwassererwärmungsanlage erfolgt grob nach Schätzwerten des Heizungsbauers und des Eigentümers, der angibt, wie groß etwa das Gebäude ist oder wie hoch etwa die Rechnungen des Energieversorgungsunternehmens in den vergangenen Jahren gewesen sind. Das Gleiche gilt für verschiedene Einstellungen der Heizungs- und/oder Trinkwassererwärmungsanlage, die üblicherweise bei der Inbetriebnahme nach der Fertigstellung vorgenommen wird. Dazu gehört etwa die Einstellung der Heizleistung und der Heizkurve.

Zu diesen Werten wird ein Sicherheitszuschlag genommen, damit die Anlage mit Sicherheit das Gebäude auch wirklich erwärmen kann und dann die so ausgewählte Anlage eingebaut und in Betrieb genommen.

Die Erfahrung zeigt, dass aus eben diesem Aspekt der vorausgesetzt sicheren Erwärmung eines Gebäudes heraus mitunter deutlich überdimensionierte Heizungs- oder Trinkwassererwärmungsanlagen eingebaut werden, die dann einerseits mehr Raum einnehmen als nötig und andererseits auch mehr kosten, als an sich erforderlich gewesen wäre. Darüber hinaus sind diese überdimensionierten Anlagen dann häufig auch nicht optimal zu betreiben, da beispielsweise vorgesehene Pumpen nie ausgelastet werden oder erzeugtes Warmwasser nie abgerufen wird.

Schließlich werden die Einstellungen der Anlage bei der Inbetriebnahme wie oben erwähnt auch mit Sicherheitszuschlägen vorgenommen. Die Anlage wird damit unter Umständen weit entfernt vom optimalen Betriebspunkt betrieben, der für die tatsächlich eingebaute Heizungs- oder Trinkwassererwärmungsanlage möglich wäre. Es kommt in der Praxis nicht oder nur sehr selten vor, dass eine derartige Einstellung nochmals nachträglich geändert wird, sofern nicht auftretende Fehler eine solche Neueinstellung erforderlich machen.

Mitunter kann auch der Fall eintreten, dass sich aufgrund der angenommenen und auf diese Weise geschätzten Erfordernisse der neuen Anlage der Eigentümer oder Nutzer gegen eine solche Anlage ausspricht, da sie ihm zu kostspielig ist oder vielleicht auch der Platz nicht zur Verfügung stehen würde, der für die tatsächlich überdimensionale Anlage benötigt werden würde.

Zu bedenken ist dabei auch, dass die neuen Anlagen beispielsweise anders als eine Vorgängeranlage zusätzlich solarthermische oder geothermische Energiequellen nutzen sollen, also deren Effekt auf bestimmte Eckwerte aus Erfahrungswerten heraus schwer zu bestimmen ist.

Eigentümer, Nutzer und auch Fachmann sind mithin verunsichert und neigen dazu, überdimensionierte und damit zu teure und zu große Anlagen einzubauen. Ökonomisch und ökologisch wäre es sinnvoll, wenn diesem Effekt entgegengesteuert werden könnte.

Aufgabe der Erfindung ist es, hier eine solche Gegensteuerung zu ermöglichen und ein besseres Verfahren zur Auslegung einer Heizungs- und/oder Trinkwassererwärmungsanlage vorzuschlagen. Eine weitere Aufgabe der Erfindung besteht darin, ein Gerät zur Durchführung eines solchen Verfahrens vorzuschlagen.

Diese Aufgabe wird gemäß der Erfindung bei einem gattungsgemäßen Verfahren dadurch gelöst, zunächst eine Analyse von aktuellen Betriebsdaten an einer vorhandenen Heizungs- und/oder Trinkwassererwärmungsanlage durchgeführt wird, dass die aktuelle Energieabnahme und/oder die aktuelle Energiezuführung von einem oder mehreren unterschiedlichen Strängen der Heizungs- und/oder Trinkwassererwärmungsanlage erfasst werden, dass eine Erfassung von Lastspitzen erfolgt, dass eine Erfassung von Zapfprofilen von einer oder mehreren parallel geschalteten Trinkwassererwärmungsanlagen erfolgt, und dass aus den erfassten Werten unter Vorgabe von Toleranzen eine Auslegung einer neuen Heizungs- und/oder Trinkwassererwärmungsanlage vorgenommen wird.

Diese Aufgabe wird außerdem bei einer Vorrichtung zur Durchführung eines Verfahrens dadurch gelöst, dass ein oder mehrere Volumenstromgeber vorgesehen sind, die in Rohrleitungen bestehender Heizungs- und/oder Trinkwassererwärmungsanlagen montierbar sind und in kabelloser oder kabelbehafteter Verbindung mit einer Gerätekonsole stehen, dass ein oder mehrere Temperaturfühler vorgesehen sind, die an oder in Rohrleitungen und/oder an Oberflächen bestehender Heizungs- und/oder Trinkwassererwärmungsanlagen montierbar sind und in kabelloser oder kabelbehafteter Verbindung mit einer Gerätekonsole stehen, und dass die Gerätekonsole mit einem Datenspeicher und bevorzugt einem Display ausgestattet ist.

Mit einem derartigen Verfahren und/oder einer solchen Vorrichtung wird es erstmals möglich, nicht nur wie bisher einfach grob geschätzt aufgrund von Standardwerten mit Sicherheitszuschlägen aufgrund von Gebäudegrößen, sondern höchst qualifiziert die Auslegung einer neuen Heizungs- und/oder Trinkwassererwärmungsanlage als Ersatz für eine bisherige alte Anlage vorzunehmen.

Mit dem Verfahren können nämlich konkret die bisherigen Betriebswerte abgelesen und in die Betriebswerte einer neuen Anlage umgesetzt werden, auch wenn diese vielleicht von einem ganz anderen Typ und unter Einschaltung von Energie aus Solarthermik und Geothermik oder auch aus ganz anderen Quellen arbeitet.

Bei dem Verfahren werden sowohl die Lastspitzen, die maximal zur Verfügung zu stellende Werte wiedergeben, als auch die ständigen Lasten wie schließlich auch die Abnahmeprofile genutzt. Es entsteht insgesamt eine Vorabanalyse einer vorhandenen Heizungsanlage.

Diese Vorabanalyse kann auch über einen längeren Zeitraum vorgenommen werden, so kann beispielsweise für einen kompletten Campingplatz ein Messzeitraum von über einem Jahr mit einem solchen Verfahren durchgeführt werden, um etwa den benötigten Warmwasserverbrauch für eine Warmwasserbereitungsanlage über die verschiedenen Jahreszeiten und auch während der verschiedenen Stunden eines Tages zu erfassen und daraus vollständig die Auslegung einer neuen Warmwasserbereitungsanlage für eben diesen Campingplatz zu ermitteln.

Aus den Messwerten lässt sich eine qualifizierte Identifikation der jeweiligen Modernisierungsschwerpunkte für die Heizungs- und/oder Trinkwassererwärmungsanlage erzielen, also beispielsweise lassen sich Hinweise entnehmen, welche Schwerpunkte bei einer Auslegung gesetzt werden sollten.

Die Investitionssicherheit für eine neue Anlage wird schon im Vorfeld gesteigert, so dass etwa bei gewerblich zu nutzenden Heizungs- und/oder Trinkwassererwärmungsanlagen von vorneherein klar ist, ob und welche Investition sinnvoll ist und ob beispielsweise eine neue Heizungs- und/oder Trinkwassererwärmungsanlage tatsächlich ökonomisch sinnvoll ist oder ob die bestehende doch besser vorläufig weiter zu betreiben wäre.

Es gibt verschiedene Aspekte, bei denen genau passende und die exakten Bedürfnisse berücksichtigende Kenntnisse beim Auslegen einer neuen Heizungs- und/oder Trinkwassererwärmungsanlage von großem Vorteil sein können.

So sind niedrige Rücklauftemperaturen in Heizungsanlagen gut für hohe Temperaturspreizungen und für gesparten Pumpenstrom. Sie sorgen für verminderte Wärmeverluste in den Speichern und den Rohrleitungen und sie sorgen für eine weitere reduzierte Wärmeanforderung.

Genau passende Vorlauftemperaturen dagegen sind ebenfalls gut für eine reduzierte Wärmeanforderung und für verminderte Wärmeverluste in Speichern und Rohrleitungen.

Wenn dafür gesorgt werden kann, dass vergleichsweise viel kaltes Volumen sich in dem System der Heizungs- und/oder Trinkwassererwärmungsanlage befindet, so ist dies gut für den Brennwertnutzen, für die Laufzeiten von Blockheizkraftwerken, für niedrige Fernwärme-Rücklauftemperaturen und für hohe Solarerträge.

Besonders bevorzugt ist es, wenn die Erfassung der Lastspitzen bei Überschreiten einer vorgegebenen oder einstellbaren oder sich aus Messwerten in einem ersten Messzeitraum ergebenden Einschaltschwellen in kürzerem Takt erfolgt.

Dies hat den Vorteil, dass gerade die Lastspitzen besonders genau abgebildet werden können, denn diese sind für die Auslegung einer neuen Heizungs- und/oder Trinkwassererwärmungsanlage besonders wichtig. Dadurch, dass der Messzeitraum nicht begrenzt ist, kann zunächst über einen bestimmten Vorlaufzeitraum abgeschätzt werden, gegebenenfalls automatisch, wo in etwa Lastspitzen liegen werden und es kann dann auf der Grundlage dieser abgeschätzten Lastspitzen eine Einschaltschwelle vorgegeben oder auch automatisch generiert werden, von der ab dann die Lastspitzen in sehr viel kürzeren Zeiträumen erfasst werden, beispielsweise im Sekundentakt, wenn die sonstigen Zapfprofile oder Zirkulationslasten im Minutentakt aufgezeichnet werden.

Eine weitere bevorzugte Ausführungsform zeichnet sich dadurch aus, dass bei mehreren Verbrauchern einer Heizungs- und/oder Trinkwassererwärmungsanlage eine Erfassung der Werte für die jeweiligen Verbraucher erfolgt und ein Lastmanagement für die Auslegung vorgenommen wird.

Auf diese Weise lassen sich detaillierte Planungsgrundlagen und ein exaktes Lastmanagement bei mehreren Verbrauchern für eine neue Heizungs- und/oder Trinkwassererwärmungsanlage schaffen. Denkbar ist auch, dass nach derartigen Verfahren sich als Ergebnis für die Auslegung herausstellt, dass nur bestimmte Teile einer Heizungsanlage oder Warmwasserbereitungsanlage ausgetauscht werden sollten, die nämlich gerade für das Lastmanagement hinsichtlich bestimmter Verbraucher bisher unbefriedigend waren.

Weiterhin werden mit den erfindungsgemäßen Verfahren vorab wichtige Messwerte gesammelt, mit deren Hilfe eine verbesserte Einstellung der Anlageparameter bei der Inbetriebnahme vorgenommen werden kann. So kann beispielsweise durch die Aufnahme der Heizlast und der Außentemperatur eine Gebäudeheizkennlinie ermittelt werden, mit der zum Einen die Heizungsanlage sinnvoll ausgelegt werden kann, als auch zum Anderen bei der Inbetriebnahme beispielsweise die Steigung der Heizkurve optimal gewählt werden kann.

Des Weiteren kann das Verfahren eine Wärmemengenzählung durchführen. So können beispielsweise Kessel auf ihre maximal erzielbare Leistung überprüft werden oder die Plausibilität im Falle von fragwürdigen Messergebnissen überprüft werden.

In einem weiter bevorzugten Verfahren wird so vorgegangen, dass die erfassten Messwerte mehrerer vorhandener Heizungs- und/oder Trinkwassererwärmungsanlagen einer Datenbank zugeführt werden, und dass mittels dieser Datenbank eine Auswertung der mehreren erfassten Messwerte für einen lokalen, regionalen und/oder nationalen Abgleich erfolgt.

Auf diese Weise lässt sich die durch die Messung entstehende lokale und regionale Expertise zusätzlich nutzen. Die entsprechenden Messergebnisse können mit denen von anderen auf diese Weise untersuchten Heizungs- und/oder Trinkwassererwärmungsanlagen verglichen werden, die sich beispielsweise in der gleichen Region oder am gleichen Ort befinden. Dadurch lassen sich etwa lokal oder regional vorherrschende Witterungsbedingungen mit entsprechenden Einflüssen auf das Heizungsverhalten sehr viel genauer abbilden, so dass auch eine Möglichkeit entsteht, etwa Heizungs- und/oder Trinkwassererwärmungsanlagen für Neubauten in dem gleichen Ort in ähnlicher Weise sehr viel genauer zu prognostizieren und auszulegen, als dies herkömmlich mit Standardwerten und Sicherheitszuschlägen möglich gewesen ist. Auch der Neubau wäre den gleichen Witterungsbedingungen ausgesetzt und man kann mit zumindest besserer Näherung auch hier ein ähnliches Verhalten hinsichtlich der Lastspitzen und der Zirkulationslasten annehmen, als wenn man eine grob globale Schätzung vornehmen könnte.

Diese Möglichkeit wäre nicht nur für eine bessere Auslegung von Heizungs- und/oder Trinkwassererwärmungsanlagen interessant und somit ökonomisch und ökologisch für die Eigentümer und Nutzer der entsprechenden Häuser günstig, sondern eine solche Datenbank ließe sich auch kommerziell nutzen, indem Energie- und Wasserversorgungsunternehmen sich für die Auslegung ihrer Anlagen den voraussichtlich zukünftig benötigten Werten anschließen, Normenausschüsse auf die Werte zugreifen, um einen lokalen, regionalen und nationalen Abgleich herzustellen, Fachplaner und Heizungsbauunternehmen sich über potentiell interessant werdende Baugrößen von Heiz ungsanlagen informieren oder auch Versicherungsunternehmen Vergleichsdaten erhalten, ob bestimmte Schadensmuster bei Gebäudeschäden aufgrund defekter Heizungs- und/oder Trinkwassererwärmungsanlagen eigentlich plausibel sind gegenüber einem möglichen ordnungsgemäßen Verlauf.

Dieser zusätzliche Nutzen würde für den eigentlichen Nutzer die Durchführung des Verfahrens kostengünstiger machen, wenn er seine entsprechenden Werte dieser Datenbank zur Verfügung stellt.

Insgesamt betrachtet werden die bisherigen, teuren und gleichwohl unzulänglichen Sicherheitszuschläge aus der Standardtechnik mehr als kompensiert durch eine passgenaue und hochwertige Systemlösung.

Der Heizungsbauer und Fachmann kann diese erfindungsgemäßen Verfahren zusätzlich anbieten und so für die eigene spätere Leistung eine bessere Grundlage schaffen und zugleich dem Eigentümer des Gebäudes und/oder Nutzer der auszulegenden Heizungs- und/oder Trinkwassererwärmungsanlage eine sinnvollere neue Anlage und zugleich das Wissen um die Richtigkeit dieser Anlage zu schaffen.

Das erfindungsgemäße Verfahren hat den Vorteil, dass sein Ergebnis offen ist. Die neue Heizungs- und/oder Trinkwassererwärmungsanlage kann konkret ausgelegt werden, es kann sich aber auch herausstellen, dass die Auslegung darin besteht, keine neue Anlage einzurichten, sondern die vorhandene nur zu modifizieren. Weiterhin kann sich die Optimierung der Verteilleitung für Heizung- oder Sanitärinstallation als vordergründig wirtschaftlich darstellen.

Die Messergebnisse können maßgeschneidert in die Projektierung einer neuen Heizungs- und/oder Trinkwassererwärmungsanlage einfließen, die von einem bestimmten Anbieter stammen kann, aber nicht muss.

Mit der Erfindung lässt sich eine sehr hohe Dynamik einer Lastschwankung, beispielsweise einer Zapfung, einer Trinkwassererwärmungsanlage sehr sauber abbilden, auch wenn die Anlage zwei oder mehr Kanäle aufweist.

Mit einer vergleichsweise einfach zu bedienenden Anordnung mit entsprechender Sensorik mit Temperaturfühlern und Volumenstromsensoren beziehungsweise Wärmenmengenzählern kann das Verfahren durchgeführt werden.

Besonders wichtig ist das Verfahren auch für die vergleichsweise weniger häufig vorkommenden Fälle, in denen die bisherigen Schätzwerte samt Sicherheitszuschlag zu niedrig lagen, so dass eine Trinkwassererwärmungsanlage vorgeschlagen, ausgelegt und eingebaut wurde, die den tatsächlichen Bedarf oder zumindest die Lastspitzen nicht leisten konnte und somit eine unbefriedigende Funktion zur Verfügung stellte. Dieser Fehler wird erfindungsgemäß ebenfalls vermieden, da ein über die bisherigen Schätzwerte hinaus gehender Bedarf etwa bei den Lastspitzen in einer Trinkwassererwärmungsanlage durch das Verfahren automatisch ermittelt und berücksichtigt werden kann.

Da das erfindungsgemäße Verfahren über mehrere Wochen, ja sogar Monate oder über ein Jahr hinaus durchgeführt werden kann, ist es ohne Weiteres möglich, auffallenden Messwerten auch konkret nachzugehen und diese zu verifizieren.

Wie sich beispielsweise herausgestellt hat, sind die Spitzenbelastungen beim Zapfen von Warmwasser gelegentlich deutlich kleiner und kürzer, als Regelwerke dies vorgeben. Die Zirkulationslast hat mitunter den mehrfachen Wert der Zapflast und die entsprechenden Bereiche der Anlagen werden daher mitunter falsch ausgelegt.

Der Zirkulations-Energiebedarf wird auch von Fachleuten mitunter aus Unkenntnis der Heizlast zugerechnet. Wie sich außerdem herausgestellt hat, wird das Gesamtsystem effizienter, wenn die Zirkulationsenergie kleiner gehalten werden kann. Schließlich stellt sich heraus, dass die Warmwasserlast bei zunehmenden Dämmstandard immer dominierender wird.

Als besonders sinnvoll hat sich die Durchführung des erfindungsgemäßen Verfahrens in Tests für den Bereich Großanlagen herausgestellt, also für Mehrfamilienhäuser, Firmengebäude, Schulen, Studentenwohnheimen, Sportanlagen, Behörden und Forschungsinstitute etc.

Gerade hier ist eine Analyse des Verbraucherverhaltens hinsichtlich des Warmwassers, der Zirkulation und der Heizung auf der Grundlage von Schätzungen besonders ungenau und die Auslegungsrichtlinien weichen deutlich von den nun gemessenen Werten ab, so dass entsprechende Anlagen nach der Durchführung des erfindungsgemäßen Verfahrens anders und insbesondere sinnvoller dimensioniert werden können.

Im Folgenden wird anhand der Zeichnung ein Ausführungsbeispiel der Erfindung näher beschrieben. Es zeigt:
- **Figur 1**: eine schematische Ansicht einer bestehenden Heizungs- und/oder Trinkwassererwärmungsanlage, an der eine Ausführungsform des erfindungsgemäßen Verfahrens durchgeführt wird;
- **Figur 2**: eine schematische Ansicht einer anderen bestehenden Heizungs- und/oder Trinkwassererwärmungsanlage, an der eine Ausführungsform des erfindungsgemäßen Verfahrens durchgeführt wird; und
- **Figur 3**: eine Darstellung von dabei gewonnenen Messergebnissen.

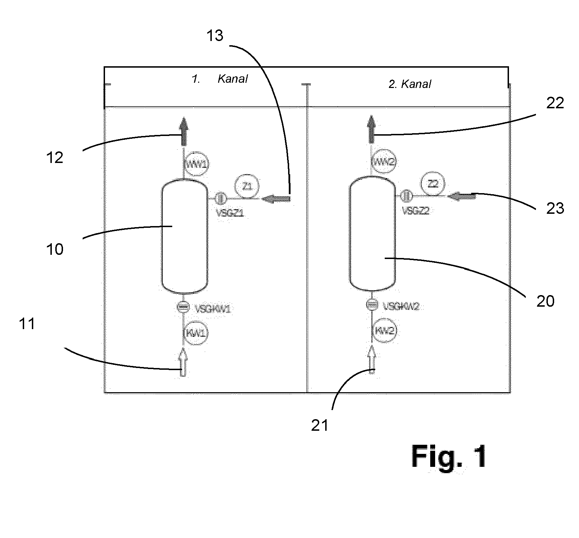

In der **Figur 1** ist eine herkömmliche und bereits bestehende Heizungs- und/oder Trinkwassererwärmungsanlage zu erkennen. Es handelt sich hier um eine Anlage mit zwei Speichern 10 und 20. Die beiden Speicher 10 und 20 sind in der Figur 1 identisch dargestellt, es kann sich aber auch um sehr unterschiedliche Speicher handeln, etwa einen Speicher einer Heizung und einen Speicher einer Warmwasserbereitungsanlage.

In den Speicher 10 wird Kaltwasser 11 zugeführt, in den Speicher 20 wird Kaltwasser 21 zugeführt.

Aus dem Speicher 10 wird Warmwasser 12 abgegeben, aus dem Speicher 20 wird Warmwasser 22 abgegeben.

Das Warmwasser 12 beziehungsweise 22 kann Gegenstand auch eines Zirkulationskreises sein (nicht dargestellt); Zirkulationskreise dienen dazu, bereitgestelltes Warmwasser wieder zurückzuführen. Eine solche Rückführleitung 13 für Zirkulationswasser zum Speicher 10 ist auf der linken Seite zu sehen, eine entsprechende Zirkulationsleitung 23 auf der rechten Seite.

An diese bestehende Heizungs- und/oder Trinkwassererwärmungsanlage mit den Speichern 10 und 20 und den erwähnten Leitungen kann jetzt eine Gerätekonsole (nicht dargestellt) angeschlossen werden. Hierzu wird ein Volumenstromgeber für Kaltwasser VSG-KW1 in die Zufuhrleitung für Kaltwasser 11 und ein Volumenstromgeber für Kaltwasser VSG-KW2 in die Zufuhrleitung für Kaltwasser 21 eingeschaltet und an einer geeigneten Stelle in der Rohrleitung montiert.

Von den beiden Volumenstromgebern VSG-KW1 und VSG-KW2 können Anschlusskabel (nicht dargestellt) zur Gerätekonsole (ebenfalls nicht dargestellt) verlegt werden. Es kann die gleiche Gerätekonsole für beide Speicher 10 und 20 und sämtliche Zuleitungen verwendet werden, wenn entsprechende Anschlüsse vorgesehen sind. Es ist auch möglich, mehr als zwei Speicher gleichzeitig zu berücksichtigen; dies wird aber eher der Anwendungsausnahmefall sein.

Es werden dann Temperaturfühler KW1 für Kaltwasser, Z1 für Zirkulationswasser und WW1 für Warmwasser an den entsprechenden Rohrleitungen für Kaltwasser 11, Warmwasser 12 und Zirkulationswasser 13 angeschlossen, ebenso Temperaturfühler KW2, WW2 und Z2 an die Rohrleitungen für Kaltwasser 21, Warmwasser 22 und Zirkulationswasser 23.

Zweckmäßigerweise wird man ein Stück der üblicherweise vorhandenen Isolierung ausschneiden, um die Fühler montieren zu können. Die ausgeschnittenen Stücke können wieder über die Fühler geschoben werden.

Auch eine Reinigung der Auflageflächen und ein Bestreichen mit Wärmeleitpaste ist sinnvoll, um besonders gute Messwerte zu erhalten. Tauchfühler als Alternative sind ebenso einsetzbar.

Auch die verschiedenen Temperaturfühler KW1, WW1, Z1, KW2, WW2 und Z2 werden mit Anschlusskabeln (nicht dargestellt) an der gleichen Gerätekonsole (nicht dargestellt) angeschlossen, wie die Volumenstromgeber.

Grundsätzlich sind auch kabellose, etwa mit Funk arbeitende Datenverbindungen möglich.

Nach dem Anschließen der Sensoren, also insbesondere der Temperaturfühler und der Volumenstromgeber, kann dann auch die Datenaufzeichnung in der Gerätekonsole eingeschaltet werden. Vor dem Beginn der Messung ist eine Plausibilitätskontrolle der Datenwerte an einem vorzugsweise vorgesehenen Display an der Gerätekonsole sinnvoll. Dabei sollte auch die Zapfung von warmen Wasser getestet werden. Von erheblichem Interesse ist auch, dass das Datum und die Uhrzeit korrekt festgestellt und aufgezeichnet und für die Plausibilitätskontrolle auch angezeigt werden.

Die Datenerfassung kann dann gestartet werden.

Mit den aufgezeichneten Werten können in dem dargestellten Ausführungsbeispiel auf zwei Kanälen zwei zu vermessende Warmwasserkreise gleichzeitig aufgezeichnet und gegebenenfalls auch verglichen werden.

Man kann auf diese Weise die Temperatur von Kaltwasser, Warmwasser und Zirkulationswasser ebenso feststellen, wie den Warmwasserverbrauch anhand der Summe der Impulse der Volumenstromgeber multipliziert mit der Impulsrate.

Auch die Momentanwerte für Warmwasser und Zirkulation in beispielsweise Litern pro Minute für den Durchfluss werden gemessen, ebenso auch die Leistung als Momentanwert der Leistung der Zirkulation. Hierzu wird die Temperaturdifferenz zwischen der Zirkulations- und der Warmwassertemperatur mit dem aktuellen Durchfluss der Zirkulation multipliziert.

Die entsprechenden Werte können kontinuierlich oder bevorzugt etwa in einem Minutentakt in einer Datei gespeichert werden.

Dabei können zusätzlich bei Überschreiten einer bestimmten Einschaltschwelle die Daten im Sekundentakt in eine separate Datei gespeichert werden, um oberhalb der Einschaltschwelle liegende Werte bei Lastspitzen nochmals gesondert und detailliert betrachten zu können.

Die aufgezeichneten Daten können nach Beendigung der Messung oder auch zwischendurch an anderer Stelle, etwa im Werk oder im Büro mittels einschlägiger Auswerteeinheiten, etwa unter Einsatz eines PCs, ausgewertet und zur Auslegung einer neuen Heizungs- und/oder Warmwasserbereitungsanlage genutzt werden.

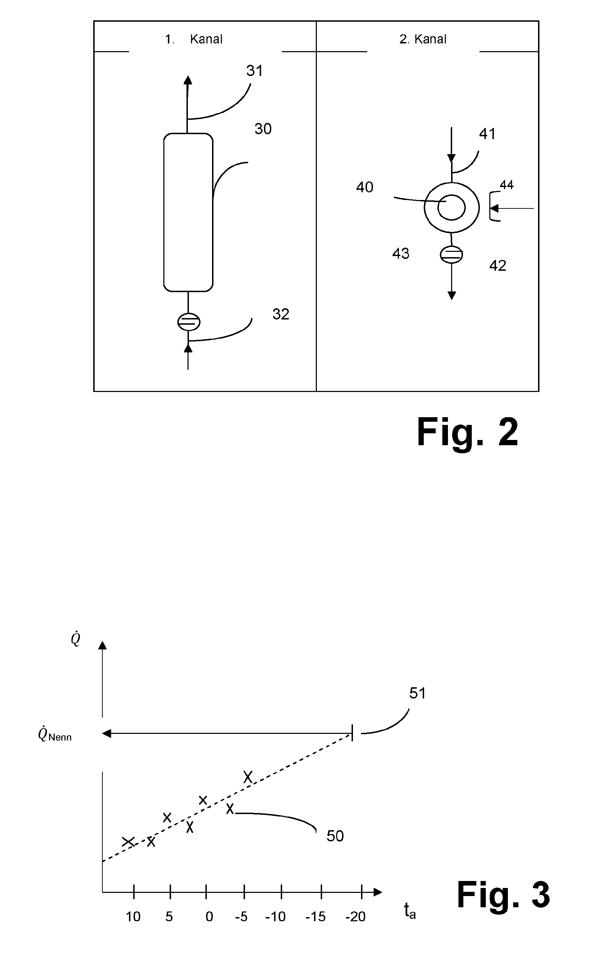

Eine andere Möglichkeit ist in der **Figur 2** dargestellt. Die dort dargestellten Messungen sind mit ein und demselben Gerät möglich wie die im Zusammenhang mit der Figur 1 beschriebenen Messungen. Es müssen keine Änderungen an der Hardware oder an den Anschlüssen vorgenommen werden.

Man sieht in der Figur 2 auf der linken Seite als Kanal 1 einen Wärmeerzeuger 30 dargestellt. Aufgenommen werden die Werte für den Wärmeerzeuger-Vorlauf 31 und den Wärmeerzeuger-Rücklauf 32. Im Wärmeerzeuger-Rücklauf 32 ist dabei ein zusätzlicher Volumenstromgeber 33 vorgesehen.

Mittels der auf diese Weise ermittelten Werte und den entsprechenden Stoffwerten für Wasser kann die Leistung des Wärmeerzeugers 30 in dem Gerät berechnet werden. Sollten von Wasser abweichende Stoffe verwendet werden, beispielsweise ein Wasser-Glykolgemisch in einer Solaranlage, so kann die Leistung durch eine Anpassung der Stoffwerte ebenfalls in entsprechender Weise berechnet beziehungsweise umgerechnet werden.

Ferner ist in der Figur 2 auf der rechten Seite als Kanal 2 ein Wärmeabnehmer 40 dargestellt. Aufgenommen werden die Werte für den Vorlauf 41 und den Rücklauf 42. Im Rücklauf 42 ist dabei ein zusätzlicher Volumenstromgeber 43 vorgesehen. Weiterhin aufgezeichnet wird mittels eine Außentemperaturfühlers 44 die Außentemperatur.

Der Außentemperaturfühler 44 nimmt die repräsentative Außentemperatur auf.

In der **Figur 3** ist horizontal eine Temperatur tₐ aufgetragen, vertikal die Leistung *Q̇*.

Die einzelnen Messwerte 50 aus der saisonalen Übergangszeit gruppieren sich um eine diese Messwerte am besten repräsentierende Gerade.

Man sieht, dass beispielsweise bei einer Auslegungstemperatur von etwa -18 °C sich ein Nennwert der Leistung von Q in Höhe von der mit 51 bezeichneten Linie ergibt.

Je weiter die Messwerte 50 auseinanderliegen, was also insbesondere auf besonders unterschiedliche von Außentemperaturfühler 44 festgestellte Außentemperaturen tₐ hindeutet, bei denen die Messungen durchgeführt wurden, desto genauer ist auch die Bestimmung der Geraden zwischen den Messpunkten.

Sofern gewünscht, kann noch auf eine Nennleistung *Q̇*_{Nenn} ein geeigneter Sicherheitsaufschlag vorgenommen werden.

In einer weiteren, nicht dargestellten Ausführungsform könnte in ähnlicher Form wie in den Figuren 1 und 2 eine Wärmemengenzählung vorgenommen werden. Dabei würde ein Volumenstromgeber VSG-Z1 sowie ein Temperaturfühler für Kaltwasser bei Z1 und ein Temperaturfühler für Warmwasser bei WW1 angeschlossen werden.

### Bezugszeichenliste

- 10: Speicher
- 11: Kaltwasser
- 12: Warmwasser
- 13: Zirkulationswasser

- 20: Speicher
- 21: Kaltwasser
- 22: Warmwasser
- 23: Zirkulationswasser

- 30: Wärmeerzeuger
- 31: Wärmeerzeuger-Vorlauf
- 32: Wärmeerzeuger-Rücklauf
- 33: Volumenstromgeber

- 40: Wärmeabnehmer
- 41: Vorlauf
- 42: Rücklauf
- 43: Volumenstromgeber
- 44: Außentemperaturfühler

- 50: Messwerte
- 51: Nennleistung

- KW1: Temperaturfühler für Kaltwasser
- KW2: Temperaturfühler für Kaltwasser

- VSG-KW1: Volumenstromgeber für Kaltwasser
- VSG-KW2: Volumenstromgeber für Kaltwasser

- VSG-Z1: Volumenstromgeber für Zirkulationswasser
- VSG-Z2: Volumenstromgeber für Zirkulationswasser

- WW1: Temperaturfühler für Warmwasser
- WW2: Temperaturfühler für Warmwasser

- Z1: Temperaturfühler für Zirkulationswasser
- Z2: Temperaturfühler für Zirkulationswasser

## Patentansprüche

1. Verfahren zur Auslegung einer Heizungs- und/oder Trinkwasserwärmungsanlage,
**dadurch gekennzeichnet,**
**dass** zunächst eine Analyse von aktuellen Betriebsdaten an einer vorhandenen Heizungs- und/oder Trinkwassererwärmungsanlage durchgeführt wird,
**dass** die aktuelle Energieabnahme und/oder die aktuelle Energiezuführung von einem oder mehreren unterschiedlichen Strängen der Heizungs- und/oder Trinkwassererwärmungsnlage erfasst werden,
**dass** eine Erfassung von Lastspitzen erfolgt,
**dass** eine Erfassung von Zapfprofilen von einer oder mehreren parallel geschalteten Trinkwassererwärmungsanlagen erfolgt, und
**dass** aus den erfassten Werten unter Vorgabe von Toleranzen eine Auslegung einer neuen Heizungs- und/oder Trinkwassererwärmungsanlage vorgenommen wird.

2. Verfahren nach Anspruch 1,
**dadurch gekennzeichnet,**
**dass** die Erfassung der Lastspitzen bei Überschreiten einer vorgegebenen oder einstellbaren oder sich aus Messwerten in einem ersten Messzeitraum ergebenden Einschaltschwellen in kürzerem Takt erfolgt.

3. Verfahren nach Anspruch 1 oder 2,
**dadurch gekennzeichnet,**
**dass** bei mehreren Verbrauchern einer Heizungs- und/oder Trinkwassererwärmungsanlage eine Erfassung der Werte für die jeweiligen Verbraucher erfolgt und ein Lastmanagement für die Auslegung vorgenommen wird.

4. Verfahren nach einem der vorstehenden Ansprüche,
**dadurch gekennzeichnet,**
**dass** zusätzlich eine Aufnahme einer Gebäudeheizkennlinie vorgenommen wird.

5. Verfahren nach einem der vorstehenden Ansprüche,
**dadurch gekennzeichnet,**
**dass** die aktuelle Energieabnahme durch Ermittlung der Zirkulationslasten, die aktuelle Energiezuführung durch Ermittlung der aktuellen Kesselleistung und/oder die Erfassung von Lastspitzen bei einer Warmwasserzapfung erfolgt.

6. Verfahren nach einem der vorstehenden Ansprüche,
**dadurch gekennzeichnet,**
**dass** die erfassten Messwerte mehrerer vorhandener Heizungs- und/oder Trinkwassererwärmungsanlagen einer Datenbank zugeführt werden, und **dass** mittels dieser Datenbank eine Auswertung der mehreren erfassten Messwerte für einen lokalen, regionalen und/oder nationalen Abgleich erfolgt.

7. Vorrichtung zur Durchführung eines Verfahrens nach einem der vorstehenden Ansprüche,
**dadurch gekennzeichnet,**
**dass** ein oder mehrere Volumenstromgeber vorgesehen sind, die in Rohrleitungen bestehender Heizungs- und/oder Trinkwassererwärmungsanlagen montierbar sind und in kabelloser oder kabelbehafteter Verbindung mit einer Gerätekonsole stehen,
**dass** ein oder mehrere Temperaturfühler vorgesehen sind, die an oder in Rohrleitungen und/oder an Oberflächen bestehender Heizungs- und/oder Trinkwassererwärmungsanlagen montierbar sind und in kabelloser oder kabelbehafteter Verbindung mit einer Gerätekonsole stehen, und
**dass** die Gerätekonsole mit einem Datenspeicher und bevorzugt einem Display ausgestattet ist.
